Europäisches Patentamt

(19) European Patent Office

Office européen des brevets

(11) Publication number: **0 135 228**
**A1**

## (12) EUROPEAN PATENT APPLICATION

(21) Application number: **84201158.7**

(22) Date of filing: **10.08.84**

(51) Int. Cl.⁴: **A 01 D 45/00**

(30) Priority: **11.08.83 NL 8302818**

(43) Date of publication of application:
**27.03.85 Bulletin 85/13**

(84) Designated Contracting States:
**AT BE CH DE FR GB IT LI LU NL SE**

(71) Applicant: **Schulte & Lestraden B.V.**
**Parklaan 156**
**NL-2171 EK Sassenheim(NL)**

(72) Inventor: **Lestraden, Jacobus Wilhelmus**
**Nachtegaallaan 4**
**NL-2172 JR Sassenheim(NL)**

(74) Representative: **Noz, Franciscus Xaverius, Ir.**
**Algemeen Octrooibureau P.O. Box 645**
**NL-5600 AP Eindhoven(NL)**

(54) Method and device for harvesting mushrooms.

(57) Method of harvesting mushrooms standing on the top surface of culture material whereby a cutting member is displaced with respect to the mushrooms with a speed such that these mushrooms are mown with a free cut.

FIG. 1.

Croydon Printing Company Ltd

EP 0 135 228 A1

- 1 -

Method and device for harvesting mushrooms.

The invention relates to a method of harvesting mushrooms standing on the upper surface of culture material.

Harvesting mushrooms is often carried out by hand which is a time consuming and hence expensive method of operation.

There have been made proposals to harvest the mushrooms by using a device adapted to move along the upper surface of the culture material and comprising a container, said device being provided with a reciprocatorily driven cutting member with the aid of which the stems of the mushrooms are cut off during the slow forward movement of the device. However in practice such a method is not satisfying since both the mushrooms are strongly mixed with culture material and the mushroom stems are often damaged seriously.

The invention has for its object to provide a method of the kind set forth in which the disadvantages inherent in the method hitherto used can be obviated.

According to the invention this can be achieved in that a cutting member is displaced with respect to the mushrooms with such a speed that the mushrooms are mown with a free cut.

It has been a surprise to find in practice that if a cutting member is moved with a sufficiently high speed along the upper surface of the culture material the mushroom stems are cut through in one stroke whilst since the mushrooms are standing in fairly great density side by side the cut mushrooms remain standing at least substantially on the cut stems. Therefore, the mushrooms are cut through rapidly whilst a smooth cut is obtained but no fouling of the mushrooms can occur.

A particularly effective device for carrying out the method embodying the invention is obtained when the device is provided with a cutting member displaceable along guides and a striking member movable parallel to the guides, with the aid of which the cutting member can be displaced stepwise.

When using such a device the cutting member can be displaced in a simple manner with the required high speed.

The invention will be described more fully hereinafter with reference to the accompanying drawings.

Fig. 1 is a schematic elevational view of part of a container for cultivating mushrooms and of a cutting member at said container.

Fig. 2 is a schematic side elevation of a device embodying the invention.

Fig. 3 is a schematic side elevation of a device of Fig. 2, a displaceable striking member being omitted.

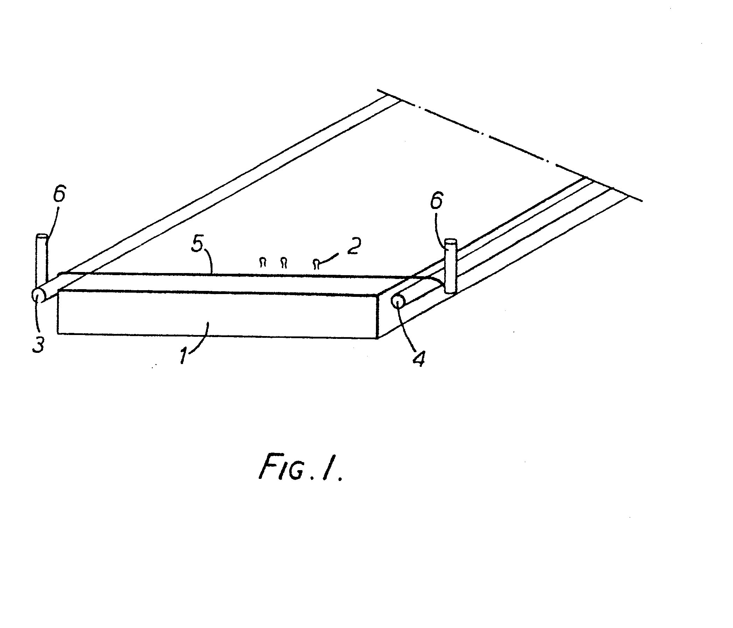

Fig. 1 shows in a perspective view a trough or a container 1 filled with culture material for growing mushrooms 2. Figure 1 only shows schematically a few mushrooms, but in reality the whole surface of the culture material in the container is usually covered with mushrooms.

The container 1 removed from the cultivating space is disposed between two guide elements 3 and 4 parallel to the direction of length of the container.

Above these guide rods is located the cutting member 5 extending transversely of the direction of length of the container; said cutting member is formed in the embodiment shown by a thin metal wire or a synthetic wire. At the ends of the wire 5 extending beyond the guide elements 3 and 4, viewed from the container 1, are provided handles 6. For harvesting the mushrooms that is for cutting the stems of the mushrooms just above the top surface of the culture material in the container, each handle can be gripped by a person standing at the side of the container 1. Both persons have to cooperate so that they keep the wire firmly taut. Then the two persons have to exert simultaneously a pull on the handle so that the cutting member 5 is displaced along the guide rods 3 and 4 over a given distance in the direction of the arrow A with a comparatively high speed so that the stems of the mushrooms are cut solely by the cutting member without using a further co-operating cutting member. It has been found in practice that when displacing the cutting member

- 3 -

**0135228**

with a sufficiently high speed the stems of the mushrooms are cut through smoothly so that owing to inertia the mushrooms remain at their places. Thus fouling with culture material is practically excluded.

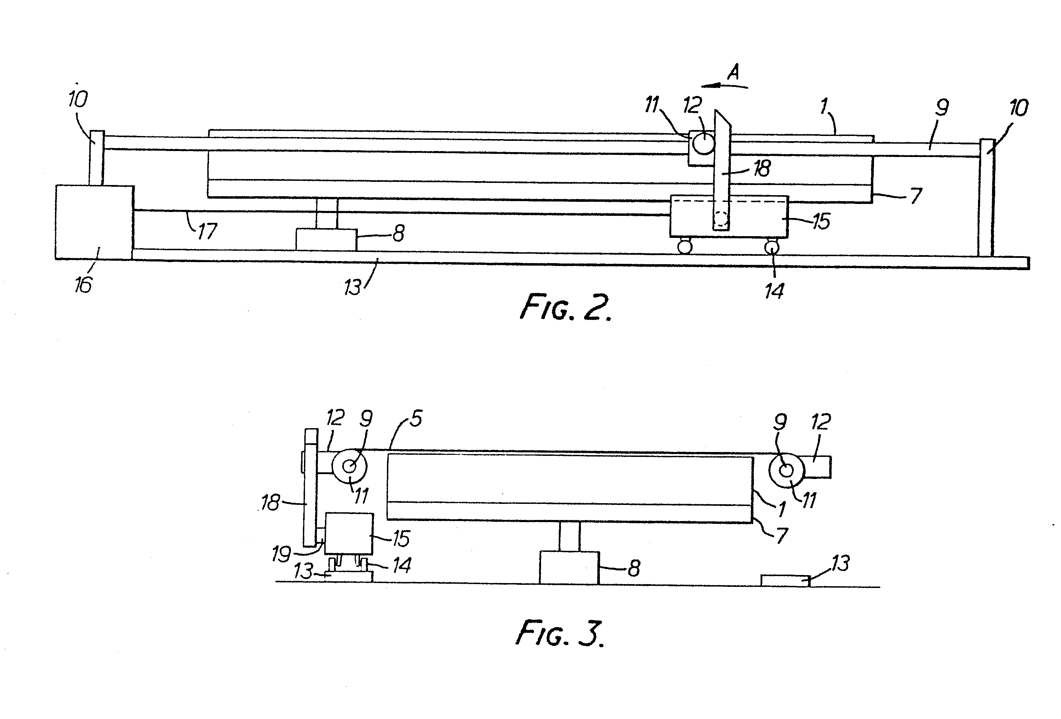

Instead of being carried out by hand said method may also be performed mechanically by using, for example, a device as shown schematically in Figures 2 and 3.

The device comprises a table 7 on which the container 1 can be displaced. The table 7 is supported by a few lifting cylinders 8 so that the table 7 with the container 1 can be set in the direction of height.

On both sides of the table 7 guide rods 9 extend parallel to the direction of length of the table. The ends of the guide rods 9 are fastened to stationary supports 10. Along each of the guide rods is slidable a sleeve 11 and between the two sleeves 11 is stretched a cutting member 5. Like in the embodiment shown in Figures 1 this cutting member may be formed by a thin wire, but it will be obvious that the cutting member in both cases may be a sharp knife or the like.

The sleeves 11 are provided with protruding ears 12.

Furthermore on both sides of the table rails 13 or similar guide members extend parallel to the direction of length of the table. On each of these rails 13 id displaceable a carriage 15 supported by run wheels 14. Figures 3 only shows a carriage on the left-hand rail 13 but it will be obvious that a similar carriage can run along the right-hand rail 13.

The two carriages can be displaced in common along the rails for example by using a winch 16 connected by cables 17 with the carriages. Of course other driving mechanisms for displacing the carriages or sledges 15 along the rails 13 are conceivable.

Each carriage is provided with a striking member formed by an arm 18 connected by means of a horizontal shaft 19 at right angles to the rails 13 with the driving member (not shown) arranged in the carriage or sledge 15 so that the arm 18 can be rotated in the direction A.

From Figure 2 it will be apparent that at a given instant the two arms 18 will strike the ears 12 protruding from the sleeves 11 so that the sleeves 11 with the intermediate cutting member 5 will be displaced by bumps which results in a similar effect as described above with reference to Figure 1. After the sleeves 11 have thus been displaced over a given distance the carriages or sledges will also be displaced over a given distance so that the arms 18 are again capable of exerting the above mentioned striking effect on the ears 12 protruding from sleeves 11. In this way the cutting member can be displaced stepwise in the direction of length of the container 1 whilst at each step the cutting member is displaced with high speed across the top surface of the culture material in the container 1 for cutting off the mushrooms. The speed of displacement will be 1 - 2 ms/sec at the least.

As a matter of course within the spirit and scope of the invention completions and/or modifications of the above described embodiments of the invention are possible.

For example in the embodiment of Figure 1 means may be provided for setting the container 1 in a direction of height with respect to the guide rods 3 and 4.

The figures used in the claims are only meant to explain more clearly the intention of the invention and are not supposed to be any restriction concerning the interpretation of the invention.

- 1 -

CLAIMS

1.      Method of harvesting mushrooms standing on the top surface of culture material characterized in that a cutting member is displaced with respect to the mushrooms with a speed such that these mushrooms are mown with a free cut.

2.      Method as claimed in Claim 1 characterized in that the cutting member is displaced stepwise across the top surface of the culture material.

3.      Method as claimed in Claim 1 or 2 characterized in that the cutting member is guided along guide members located on both sides of the surface to be worked.

4.      Device for carrying out the method claimed in anyone of the preceding Claims characterized in that the device comprises a cutting member displaceable along guide members and a striking member displaceable parallel to the guides for stepwise displacement of the cutting member.

5.      Device as claimed in Claim 4 characterized in that the cutting member is arranged between two supports slidable along guides whilst carriages or sledges are displaceable parallel to the guides, each of which supports a striking member to be rotated.

6.      Device as claimed in anyone of the preceding Claims characterized in that means are provided for carrying out a relative displacement in a direction of height between the guides for the cutting member and the top surface of the culture material.

FIG. 1.

FIG. 2.

FIG. 3.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-3 635 005  (PERSSON)  * Column 2, lines 24-63 * | 1,2 | A 01 D   45/00 |
| Y | DE-C-  609 505  (HEINRICH XVIII VON HOCHBERG)  * Page 1, right-hand column, lines 55-68 * | 1,2 | |
| A | GB-A-1 214 399  (SOUTH AFRICA INVENTIONS DEVELOPMENT)  * Page 1, lines 66-70; figure 1 * | 6 | |
| A | FR-A-2 408 997  (VAN DEN TOP) | | |
| A | US-A-1 708 771  (NOBLE) | | TECHNICAL FIELDS SEARCHED (Int. Cl.4) |
| | ----- | | A 01 D  A 23 N  B 26 D |

The present search report has been drawn up for all claims

| Place of search | Date of completion of the search | Examiner |
|---|---|---|
| THE HAGUE | 13-11-1984 | DE LAMEILLIEURE D. |